# EUROPEAN PATENT APPLICATION

(11) **EP 1 624 401 A1**
(43) Date of publication of application: **08.02.2006**
(21) Application number: 05380078.5
(22) Date of filing: 18.04.2005
(51) Int. Cl.: G06K 17/00

(54) **Reply completion form for optoelectronic reading**

(30) Priority: 17.11.2004 ES 200402611 U; 17.11.2004 ES 200402612 U; 02.08.2004 ES 200401917 P; 02.08.2004 ES 200401918 P
(71) Applicant: Rodrigues Isidoro, José, Salamanca 37004 (ES)
(72) Inventor: Rodrigues Isidoro, José, Salamanca 37004 (ES)
(74) Representative: Temino Ceniceros, Ignacio

(57) **Abstract**

Of the multiple choice test type, and each of these questions is associated with a section, and each section is structured by means of three figures, such as an "x" (15) formed by a broken line that is inscribed in a quadrilateral (16), under which lies at least one horizontal line that is also broken (18), and preferably several lines (18), (18'), (18"), the "x" (15) being remarked by the users when the answer is given as valid, and the quadrilateral (16) being filled in by the users when they intend to cancel the answer, users then proceeding to remark the line (18) if there is a further change of mind and users decide once again that the answer is valid, filling in the line (18) with the rest of the quadrilateral (16) if the users once again think that the answer is wrong, remarking the second broken line (18') in the event of a further change of mind, and so on and so forth. It is thus possible to make a considerable number of changes where validating / invalidating the answers are concerned, taking up a minimum amount of space on the form and in a rational and logical way for the person examining or using the form.

## Description

### OBJECT OF THE INVENTION

This invention is a form, which has been especially devised for use in systems such as multiple choice exercises or optional reply exercises, which not only enables the user to mark the selected reply options, but also to remove the markings and to choose a different answer, and to do all of this in such a way that the marks left on the form with a writing implement or in some indelible way, can be read by an optoelectronic system that automates the correction process for this type of test.

The object of the invention focuses on each one of the sections or potential answers that are featured on the form and consists of a special structuring for those sections, which substantially improves the way the system is used, almost completely removing the risk of errors being made by the people who use the form.

The invention is particularly useful for psychometric analyses, epidemiological examinations and a variety of other applications, such as questionnaires, etc.

### BACKGROUND TO THE INVENTION

The use of multiple choice type exercises, where each question has a series of potential answers and the persons have to select the ones that that they think are correct, is widespread, and the same applies to the inclusion of sections that establish the exact zones where the pre-established layout marks have to be placed, and these can be automatically recorded and read with an optoelectronic system that makes the test correction process easier and ensures that the results are as reliable as possible.

Initially, the different sections featured on the form were limited to one single empty piece, in such a way that if that section was selected as the theoretically correct answer, it was filled in. To make it possible to alter it, that is to say, to cancel the answer selected and to replace it with another one, it was necessary to make the mark with non-permanent writing implements, such as pencils or similar, which would enable the writer to erase them. This solution was unsatisfactory, because although it enabled the examiner to read the forms with optoelectronic systems, it was also easy to manipulate the tests, falsifying the results.

To overcome this problem, forms are now used that are equipped with sections made up of several figures, in such a way that filling in a figure amounts to choosing a specific answer, the filling in of a second amounts to cancelling a reply that has already been selected, and filling in a third means recovering the original answer that had been cancelled, so the marking can be done with indelible ink that renders it impossible to fraudulently manipulate the results of the tests.

However, this solution also has a technical problem, because there are no means for directly identifying the meaning of those pieces, or the need to associate a specific action with an identifying premark, which means that sometimes, depending on the type of section used, the test results are biased for reasons that have nothing to do with their content. In the first case, these reasons usually involve elements that are associated with the spatial arrangement or the way the scheme inherent to each subject is organised and significantly involved in a filling in of sections that, not equipped with distinguishing elements, require one single action, not spatially distinct in its orientation, for contrasting results, such as cancelling a mark and recovering it. In the second case, the reasons usually involve the difficulty in mentally correlating a specific identification or a specific action at all times throughout the test, such as, for example, an empty space for marking, over which there is, for example, an " X" for cancelling or an " O" for recovering.

It is obviously the case that, the lower the level of preparation that the user of the form has, the greater the problem becomes.

Furthermore, the use of several figures on each section, which match respective possibilities of rectifying the answer, means using up a considerable amount of space on the form, which imposes a considerable restriction on the number of questions that can be asked on it, especially when the forms are of a certain size.

### DESCRIPTION DE LA INVENTION

The form that is proposed in the invention overcomes the aforementioned problem in a totally satisfactory way, thanks to the use of marking sections provided with several figures that, because of their layout and the way they are arranged, enable the user to intuitively identify exactly what each figure therein is for, which removes the risk of the above-mentioned errors being made.

With a view to this and to be specific, each one of the answering sections that are featured on the form is structured by means of a central figure, and two figures positioned symmetrically with respect to the first one, which can either be located to the right and left, or above and below, in such a way that there is no side restriction for the answers, which is the cause of the problem.

It is the central figure that has to be used to mark in the answer, and it can be cancelled in either of the other two symmetrical figures, while the answer is newly recovered in the third figure, the one that is not used for cancellation.

Another one of the characteristics of the invention is that the end figures protrude symmetrically with respect to the central figure, and they are linked to each other by broken lines, which define two further spaces similar to the central figure that are located immediately above and below them, in such a way that together with those end figures they form a rectangular area, which also has to be completely filled out in the event of users changing their minds again and, after having decided that an answer was correct, after having cancelled it out, and then having decided that it was correct again, once again decides that the answer is not correct.

In one simplified version of the invention, each section contains one single figure, but it is equipped with a marking guide equivalent to the central figure in the preceding case, in such a way that the section allows for the combined action of marking and cancelling, the act of " marking" being carried out on the aforementioned marking guide and the act of cancelling being carried out by filling in the whole area of the module, the section also being modular, in such a way that more than one module like the one described, can be involved, when there is a need to increase the possibilities for correcting the answers.

The area occupied by each module will be defined by one boundary line and the marking guide, preferably arranged centrally, and can be defined by different types of graphics, such as two small opposing circles, two triangles, two parallel straight lines running close to each other, etc., there being virtually no limits in this respect.

Furthermore, if there is a wish to increase the form' s capacity, by using three figures for each section, as in the first case, these figures can be superimposed and concentric instead of aligned, in such a way that the surface area covered by the section as a whole, is equivalent to the area occupied by only one of the pieces in the preceding case.

To be more specific, it is planned that the first mark, the one that indicates the first choice of answer as being correct, takes the form of an " x" made up of broken lines, which have to be thickened by the form if selected, that the second figure is quadrilateral in shape and the aforementioned " x" has to be inscribed there and this can be a broken line, whose interior can be filled out in the event of the user wishing to cancel the first answer, and finally the third figure takes the form of a line enveloping the preceding ones, which is also broken, which can either be a circle, quadrilateral or any other suitable geometrical figure, in such a way that the filling in of the whole surface defined by this envelope indicates the user has made a new choice as being the correct answer to the question.

Finally, on the same line of this superimposed and concentric arrangement for the figures, if one wishes to increase the number of possibilities for rectifying the answer, it is possible to retain the central " x" and the quadrilateral figure in which it is inscribed, as in the preceding case, but replacing the envelope with one, two or more broken lines that are horizontal and lower, the number varying depending on the envisaged variation capacity, which enables the user to make successive marks for cancelling and endorsing the answer, as will be seen below.

### DESCRIPTION OF THE DRAWINGS

In order to complement the description that is being made and with the aim of allowing a better understanding of the characteristics of the invention, according to an example of the preferred embodiment of same, we include a set of drawings of an illustrative and non-restrictive nature, representing the following:
Figure 1.- This shows a diagram of a section that is to form part of a reply completion form for optoelectronic reading, realized in accordance with the object of the invention.
Figure 2.- This shows the succession of possible stages in the use of the section represented in the preceding figure.
Figure 3.- This also shows in diagram form, another way of devising the section that is to form part of the aforementioned reply completion form, but simplified with respect to the preceding figure.
Figure 4.- This shows a representation similar to the one in Figure 3, but for a section with two modules that, as a result, enables the user to duplicate the marking potential.
Figure 5.- This shows another representation similar to the ones in Figures 3 and 4, but for a practical realization in which the section contains four modules.
Figure 6.- This shows the sequence for the different stages of use for a section like the one shown in Figure 4.
Figure 7.- This also shows a diagrammatic representation of another way of realizing the section, in which the different figures contained therein are arranged concentrically.
Figure 8.- This shows a grouping of four sections like the one in the preceding figure, for the four potential ways of answering a certain question, in a multiple choice test type questionnaire or similar.
Figure 9.- This shows, in a representation similar to the preceding figure, an alternative arrangement for the same section.
Figure 10.- This shows an alternative arrangement for the section in Figure 7, where two of the images are still concentric whereas the third one is located below the other two.
Figure 11.- This shows a representation similar to the one in Figure 10 for an alternative arrangement for the section in that figure, offering a greater number of opportunities to rectify the answer.
Figure 12.- Finally, this shows a group of four sections as in the preceding figure, with four possible answers for the same question, and above one of those answers the eight possibilities for users to change their mind that are permitted in the section shown in Figure 11.

### REALISATION OF A PREFERRED EMBODIMENT OF THE INVENTION

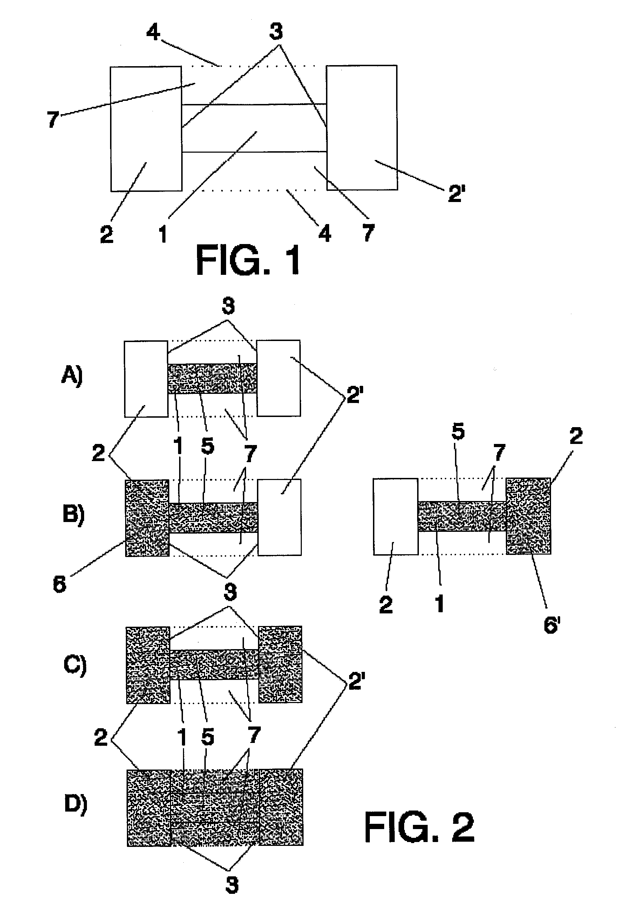

In view of the underlined figures and particularly Figure 1, it can be seen how the section that is to form part of the form that is the subject of the invention is structured by three figures (1-2-2' ) of which the central figure (1) is lengthened horizontally, whereas the side figures (2-2' ) are considerably shorter and higher, arranged symmetrically, directly related to the intermediate figure (1) through sharing the same edges (3), in such a way that the section or premark is laid out in the form of an " H" that is considerably lengthened transversally.

The two end figures (2-2' ) are linked up, via their upper and lower ends, by two broken lines (4), which together with the end figures (2-2' ) form a rectangular perimeter.

With the aforementioned structure, the form is used in the following way:

For a particular question, after users have chosen a section like the one shown in Figure 1 for an answer that they believe to be correct, they fill in (5) the central figure (1), as shown in Sequence A of Figure 2.

Under the assumption that the users change their minds and decide that that answer is not correct, they will then fill in (6) or (6' ) of any of the end figures (2-2' ), as shown in Sequence B of Figure 2.

If the users of the form wish to change their minds again and decide that the chosen answer is the correct one, they will fill in (6) or (6' ) of the side piece (2-2' ) not filled in during the preceding operation, as is shown in Sequence C of Figure 2.

There is also another possibility with the same three figures, which consists of cancelling the answer yet again, in which case the user will fill in the extra spaces (7) defined by the broken lines (4), as is shown in Sequence D of Figure 2.

In accordance with the aforementioned explanation, the optoelectronic reading equipment will consider the answer to be valid when only the central figure (1) of the section concerned is filled in or when figures (2-2' ) are also filled in as well as this figure and it will consider the answer not to have been selected by the user, when the central figure (1) is filled in and only one of the side figures (2) or (2' ), and also when the whole section is filled in, including its extra spaces (7).

The section shown in Figure 1 can be simplified as shown in Figure (3), in such a way that it is reduced to a closed figure (8), defined by its boundary line (9), which in the example of the practical realization takes the form of a rectangle that is extended horizontally, but which can take on any other arrangement that is thought advisable, the boundary line (9) being interrupted half way along its longer sides, where two tiny circles (10) are located that together serve to form a marking guide, as will be seen below.

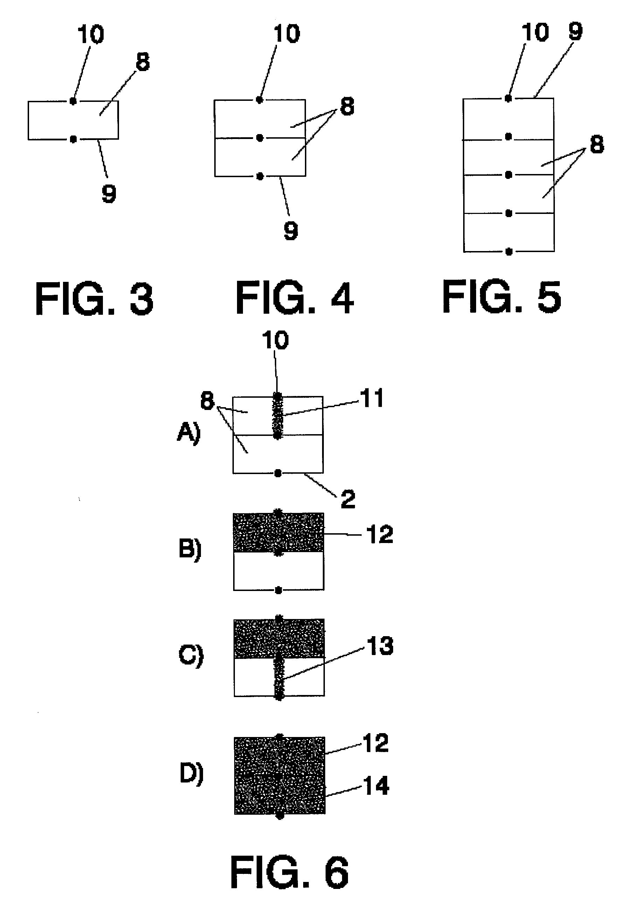

The section may either contain one single module as shown in Figure 3, two modules as is the case in Figure 4, or a larger number of modules, as is the case in Figure 5, depending on which is thought to be more advisable in each case. Obviously, the larger the number of modules, the greater the number of possibilities for changing or rectifying the answer.

The boundary line (9) can either be broken or unbroken, and the small circles (10) that form the marking guide can be replaced by any other shape that is able to clearly identify the marking guide, offering the users implicit but clear information regarding the need to mark the answer concerned on that marking guide.

In this sense, when defining the marking guide, it could also be perfectly valid to use two parallel and close straight lines that define the narrow receiving strip for marking.

According to this structuring, under the assumption that each section on the form uses the Figure 4 solution, with two modules, the form is used in the following way:

For a particular question, and after users have chosen a section like the one shown in Figure 6, for the answer that is considered valid, they will put the mark (11) on the marking guide (10) in the first module or upper module in the section, as is shown in Sequence A of Figure 6.

If users then change their minds and decide that the answer is not correct, they fill in (12) the whole area (8) of that upper module, as is shown in Sequence B of Figure 6.

If the users once again change their minds and consider that the original answer was the correct one, they put their mark (13) on the marking guide (10) in the lower module of the section, as is shown in Sequence C of Figure 6.

If the users yet again change their minds and decide that the answer is incorrect and wish to cancel it, all they have to do is fill in this area (14) of the lower module, too, and this will finally cancel the answer, as is shown in Sequence D of Figure 6.

In accordance with the aforementioned, the optoelectronic reading equipment will consider an answer to be valid when a mark (11-13) appears on any of the marking guides (10) in one of the modules, as long as the rest of the surface of that module, that is to say, the area (8) in which the mark is located (11-13) is not filled in, whereas when there is no clearly defined marking line (11-13), because it is located in the heart of a filled in area (12-14), this equipment will consider that the answer has been cancelled out and must not be taken into account.

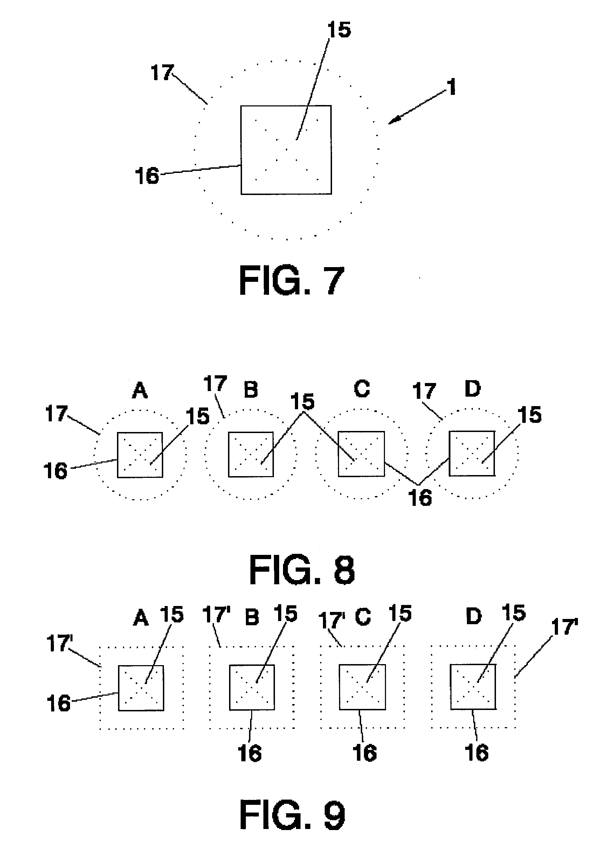

One alternative to this practical realization can be seen in Figures 7 to 9, where the figure or main marking, equivalent to the one that is indicated with (1) in Figure 1 and with (11) in Figure 6, consists of an " x" (15), comprising broken lines, which is framed in a quadrilateral shape (16), which in the example of the practical embodiment chosen is a square, but it could just as well be a rectangle, or even another geometrical figure, such as a circle, in any case in the form of an unbroken and clearly defined line. This set is supplemented with an envelope (17) composed of a broken line, which in the practical realization shown in Figures 7 and 8 is a circle, whereas in Figure 9 it is quadrilateral (17' ), but it could just as well be oval or any other geometrical figure, or even merely take the form of four points duly aligned with the branches of the central " x" (15) and set sufficiently apart from the quadrilateral figure (16).

This concentric arrangement and with a radial progression of the three bodies or markings that form part of the section, mean that by pure logic and without needing to go more deeply into the matter or to receive additional instructions, the user uses the " x" (15) as the marking base, for any of the answers A, B, C or D that are selected, changing the broken lines on that " x" into unbroken and clear lines. If users change their minds and think that they have made a mistake with their answers, they will tend to cancel them, also in a logical way, that is to say, removing the " x" by filling in the quadrilateral (16) that contains it, and finally in the event of users thinking that the original answer was correct, they can change back by filling in the area defined by the envelope (17) or, when in order, extend the lines of the " x" (15) to the outer points or marks that are aligned with them.

It is thus possible to ensure that the surface area of the section is covered as little as possible, even though three markings are permitted, and that makes it much easier for the user to make markings without risk of error.

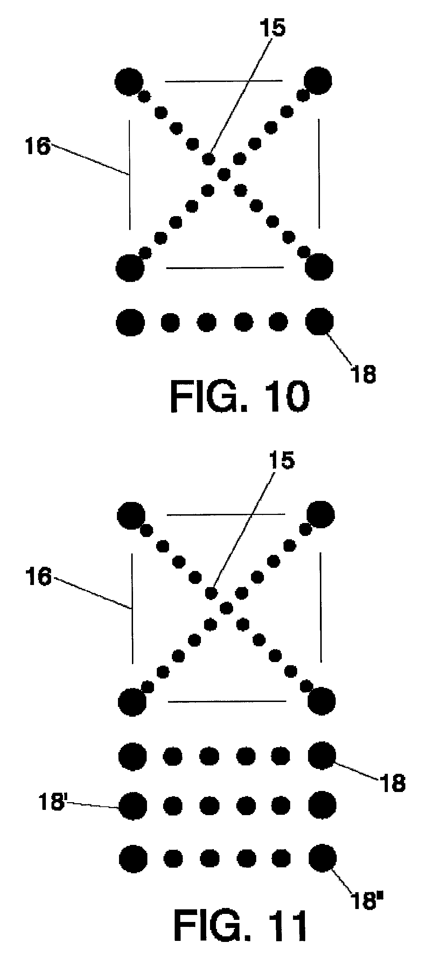

If one wishes to increase the number of markings to more than the three referred to above, the solution shown in Figures 10 to 12 can be taken, in which the central and main " x" (15) and the quadrilateral (16) in which it is inscribed are retained, but the envelope (17) is replaced by at least one lower and broken line (18), preferably the same length as the one at the bottom of the quadrilateral (16), several broken lines (18), (18' ), (18'') preferably being located in the lower zone, as is shown in Figure 11, to allow for an increase in the number of opportunities for users to change their minds where the correct answer is concerned, and the number of lower lines (18) can vary either positively or negatively, without this affecting the essential elements of the invention.

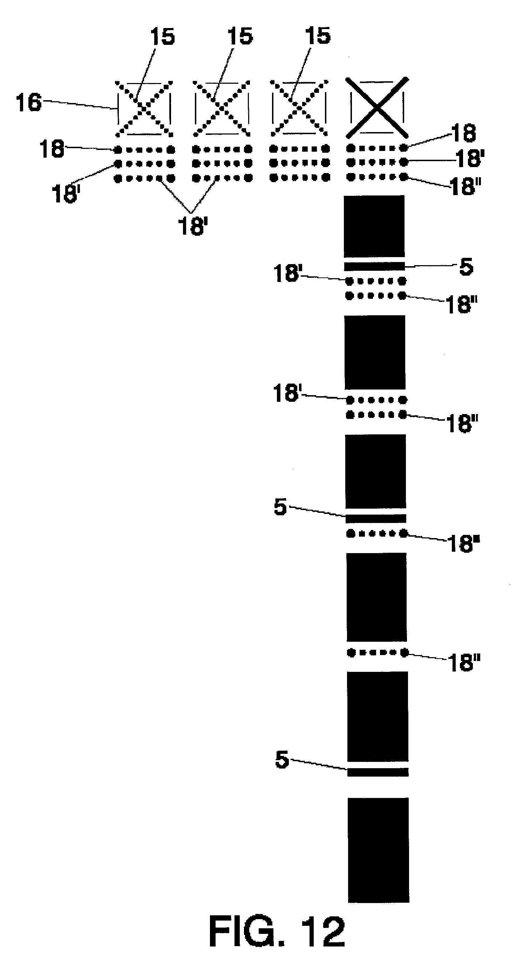

In this case, after remarking the " x" (15) as the valid answer, and when in order, cancelling it by blocking in the quadrilateral (16), if the answer is once again considered valid, the users then remark the first broken line (18), in the event of a further change of mind on filling in the area defined between that line (18) and the quadrilateral (16), in the event of another change of mind considering the answer to be valid by remarking the second line (18' ), and so on and so forth in the event of the users changing their minds again, as is shown in the sequences in Figure 12.

## Claims

1. ^{st}.- Reply completion form for optoelectronic reading, of the type that is used for multiple choice answers, in the form of two sections, each of which contains several figures that enable users to mark and cancel out an answer, **characterised by** the fact that each one of the sections has at least three figures interrelated in such a way that they constitute three marking zones, one of which is for the first marking of a valid answer, the second one of which is for cancelling that answer and the third one is for validating the original answer once again, by successively filling in those figures.

2. ^{nd}.- Reply completion form for optoelectronic reading, as in the 1^{st} claim, **characterised by** the fact that one of those figures (1) is in a central position, and the other two figures (2-2' ), at the ends, are symmetrical and are directly associated with the intermediate figure (1) because they share edges (3).

3. ^{a}.- Reply completion form for optoelectronic reading, as in the preceding claims, **characterised by** the fact that the end figures (2-2' ) protrude symmetrically with respect to the intermediate figure (1), and two broken lines (4-4' ) run between them, which form extra spaces (7) that, together with the figures themselves (1-2-2' ), define a rectangular zone, which can be completely filled in.

4. ^{a} .- Reply completion form for optoelectronic reading, as in the 1st claim, **characterised by** the fact that the first figure takes the form of a marking guide (10) established in the heart of a boundary line (9) enclosing a marking area (8), in such a way that the purpose of the marking guide (10) is to receive a line indicating that the answer is valid, whereas if the user completely fills in the entire marking surface (8) this means that the preceding marking has been cancelled.

5. ^{th}.- Reply completion form for optoelectronic reading, as in the 4^{th} claim, **characterised by** the fact that the above-mentioned boundary line (9) that defines the marking area (8), establishes an elongated layout for the latter, preferably rectangular, the marking guide (10) being located so that it corresponds with the vertical line and middle of that area (8).

6. ^{th}.- Reply completion form for optoelectronic reading, as in the 4^{th} and 5^{th} claims, **characterised by** the fact that the marking guide is defined by two small circles (10) in opposition with any two graphic forms that identify the marking of that guide for marking the answer, and also by the fact that there are two parallel lines running close to each other.

7. ^{th}.- Reply completion form for optoelectronic reading, as in the 4^{th}, 5^{th} and 6^{th} claims, **characterised by** the fact that the assembly formed by the marking guide (10) and the boundary line (9) constitute a module that can be repeated a variable number of times within each section, depending on the number of times it is planned that the user can mark and cancel the answer.

8. ^{th}.- Reply completion form for optoelectronic reading, as in the 1^{st} claim, **characterised by** the fact that the aforementioned marking figures are arranged concentrically, in such a way that the possible and successive markings are made in a radial way as from the central figure (15).

9. ^{th}.- Reply completion form for optoelectronic reading, as in the 8^{th} claim, **characterised by** the fact that Central figure (15) consists of an " x" with broken lines, the second figure is a quadrilateral (16) inside which the " x" is located (15) and it is to be filled in, when in order, and the third one is an envelope (17) with broken lines, which encloses the aforementioned quadrilateral (16) and which can also take the form of either a quadrilateral, a circle or any other suitable geometrical figure.

10. ^{a} .- Reply completion form for optoelectronic reading, as in the 1st claim, **characterised by** the fact that the three figures consist of a broken " x" (15), a quadrilateral with a broken line (16) where the " x" is inscribed (15),and a straight, broken line (18) lying below that quadrilateral.

11. ^{a}.- Reply completion form for optoelectronic reading, as in the 10th claim, **characterised by** the fact that it can optionally contain two or more lower lines that are broken (18), (18' ), (18'' ), depending on how many possibilities of cancelling and recovering the answers it is planned to give the user.
